# EUROPÄISCHE PATENTSCHRIFT

(11) **EP 0 535 474 B1**
(45) Veröffentlichungstag und Bekanntmachung des Hinweises auf die Patenterteilung: **02.04.1997**
(21) Anmeldenummer: 92116051.1
(22) Anmeldetag: 19.09.1992
(51) Int. Cl.: B32B 17/10, B41M 1/34

(54) **Verfahren zur Herstellung einer einfachgekrümmten oder einer doppeltgekrümmten Verbundglasscheibe, insbesondere für Kraftfahrzeuge**
Method of fabricating a single curved or double curved laminated window, especially for vehicles
Procédé de fabrication d'un vitrage feuilleté bombé simplement ou bombé doublement, notamment pour véhicules automobiles

(30) Priorität: 01.10.1991 DE 4132652
(43) Veröffentlichungstag der Anmeldung: 07.04.1993
(73) Patentinhaber: FLACHGLAS AKTIENGESELLSCHAFT, 90766 Fürth (DE)
(72) Erfinder: Tünker, Gerhard, W-4100 Duisberg 14 (DE)
(74) Vertreter: Honke, Manfred, Dr.-Ing.

(56) Entgegenhaltungen:
- EP-A- 0 459 105
- DE-A- 3 843 626
- US-A- 4 654 067
- US-A- 5 023 023
- PATENT ABSTRACTS OF JAPAN vol. 13, no. 283 (C-612) 28. Juni 1987 & JP-A-10 79 037 (NIPPON STEEL CORP)
- CHEMICAL ABSTRACTS, vol. 112, no. 10, 5. März 1990, Columbus, Ohio,US; abstract no. 82806k, HATANO KAZUO 'GLASS SLURRIES FOR SPIN COATING' & JP 01192745 (NIPPON ELECTRIC GLASS CO LTD)
- SPRECHSAAL Bd. 118, Nr. 7, Juli 1985, COBURG Seiten 595 - 598 V. GRIGAT 'CAB-OSIL - ZUR STABILISIERUNG VON FRITTEGLASUREN UND ENGOBEN' Punkte 4 und 6

## Beschreibung

Die Erfindung betrifft ein Verfahren zur Herstellung einer einfachgekrümmten oder einer doppeltgekrümmten Verbundglasscheibe, insbesondere für Kraftfahrzeuge, die aus einer Innenscheibe aus Glas, einer Außenscheibe aus Glas und einer Kunststoffolie-Zwischenschicht besteht und auf der Kunststoffolienseite von zumindest einer der Scheiben (bei Kraftfahrzeugscheiben auf der Kunststoffolienseite der Außenscheibe) eine im Siebdruckverfahren aufgebrachte Bedruckung, insbesondere eine Randbedruckung aufweist. - Die Bedruckung kann bei solchen Verbundglasscheiben die verschiedensten Zwecke erfüllen. Als Randbedruckung ist sie bei Kraftfahrzeugen üblich. Als eine solche Randbedruckung dient sie zur Kaschierung anderer Bauteile des Kraftfahrzeuges. Es kann sich auch um eine Antennen- und/oder Heizleiterbedruckung handeln. An die Bedruckung werden hohe Anforderungen gestellt. Sie muß die statistische Lebensdauer einer bedruckten Verbundglasscheibe beanstandungslos überdauern. Sie darf sich weder farblich verändern und sich auch nicht von der zugeordneten Glasscheibe lösen. Die Bedruckung selbst muß konturenscharf, deckend, blasenfrei und insgesamt eindrucksvoll sein. Eine Bedruckung, die aus einer Emailfarbe besteht, würde den Anforderungen genügen, verlangt jedoch ein aufwendiges Verfahren für die Herstellung der einfachgekrümmten oder doppeltgekrümmten Verbundglasscheiben insgesamt.

Bei der Herstellung von einfachgekrümmten oder doppeltgekrümmten Verbundglasscheiben ist es grundsätzlich bekannt, wie folgt vorzugehen: Die beiden Scheiben, die zur Verbundglasscheibe vereinigt werden sollen, werden aufeinander gelegt, auf Verformungstemperatur erwärmt und als Pärcher entsprechend der einfachen Krümmung oder der doppelten Krümmung gekrümmt. Die gekrümmten Scheiben des Pärchens werden voneinander entfernt, die Kunststoffolie wird angeordnet und die Pärchenscheiben werden unter Zwischenschaltung der Kunststoffolie wieder aufeinandergelegt, erwärmt, und zur Verbundglasscheibe vereinigt. Das hat sich bewährt und führt wegen der Pärchenbildung und Pärchenkrümmung dazu, daß die beiden Scheiben, bis auf zu vernachlässigende Toleranzen, die gleiche Krümmung aufweisen, was zur Vermeidung störender optischer Effekte von Bedeutung ist. Diese bewährte Verfahrensweise kann ohne weiteres nicht durchgeführt werden, wenn die Bedruckung im Siebdruckverfahren mit einer Emailfarbe erfolgt und den Anforderungen genügen soll. Es wird anders gearbeitet:

Bei dem aus der Praxis bekannten Verfahren, von dem die Erfindung ausgeht, wird mit einer zum Bedrucken einer Glasscheibe üblichen Emailfarbe gearbeitet. Diese Emailfarbe, die ein organisches Bindemittel, z. B. Ethylcellulose, aufweist, wird auf die ebene, ungekrümmte Glasscheibe aufgebracht, die bedruckt werden soll, und die Bedruckung wird auf der ebenen Glasscheibe eingebrannt, und zwar mit Einbrenntemperaturen um 555° C, wie es üblich ist. Es findet also ein Voreinbrennen statt. Danach erst werden die beiden Scheiben mit der eingebrannten Bedruckung aufeinander gelegt, auf Verformungstemperatur erwärmt und als Pärchen entsprechend der einfachen Krümmung oder der doppelten Krümmung gekrümmt. Danach wird wie beschrieben weiter verfahren. Der vorstehend beschriebene, vorgeschaltete Verfahrensschritt, bei dem die ebene Glasscheibe mit der Emailfarbe bedruckt und die Bedruckung auf der ebenen Glasscheibe eingebrannt wird, ist aufwendig und in bestehende Fertigungsstraßen für einfachgekrümmte oder für doppeltgekrümmte Verbundglasscheiben nicht leicht integrierbar. Auch kann nicht verhindert werden, daß beim Einbrennen der Bedruckung die entsprechende Glasscheibe eine Verschlechterung ihrer Plantoleranz erfährt, was zu optischen Fehlern führen kann. Versucht man auf das vorstehend beschriebene Voreinbrennen zu verzichten und bringt man im Zusammenhang damit die übliche Emailfarbe auf, um die Glasscheiben nach Pärchenbildung auf Verformungstemperatur zu erwärmen und als Pärchen entsprechend der einfachen oder doppelten Krümmung zu krümmen, wobei gleichzeitig ein Einbrennen der Emailfarbe erfolgt, so reicht die Haftung der Emailfarbe auf der Glasscheibe nicht aus, störende Blasenbildung wird beobachtet. Das gilt auch dann, wenn mit besonderen, aufwendigen Siebdruckölen gearbeitet wird.

Der Erfindung liegt die Aufgabe zugrunde, ein Verfahren zur Herstellung einer einfachgekrümmten oder einer doppeltgekrümmten Verbundglasscheibe des eingangs beschriebenen Aufbaus, insbesondere für Kraftfahrzeuge anzugeben, welches es erlaubt, unter Verzicht auf das beschriebene Voreinbrennen eine dauerhafte Bedruckung aus einer Emailfarbe herzustellen.

Zur Lösung dieser Aufgabe ist Gegenstand der Erfindung ein Verfahren zur Herstellung einer einfachgekrümmten oder einer doppeltgekrümmten Verbundglasscheibe, insbesondere für Kraftfahrzeuge, die aus einer Innenscheibe aus Glas, einer Außenscheibe aus Glas und einer Kunststoffolie-Zwischenschicht besteht, und auf der Kunststoffolienseite von zumindest einer der Scheiben, bei Kraftfahrzeugscheiben auf der Kunststoffolienseite der Außenscheibe, eine im Siebdruckverfahren aufgebrachte Bedruckung, insbesondere eine Randbedruckung aufweist, - mit den folgenden Maßnahmen und Verfahrensschritten:
a) Es wird eine siebdruckfähige Emailfarbe verwendet, die aus Glasfluß, zumindest einem keramischen Farbkörper sowie einem anorganischen Bindemittel besteht und mit einem organischen Siebdrucköl angemacht wird,
b) die Bedruckung wird mit der Emailfarbe gemäß a) auf die zugeordnete Oberfläche der Scheibe mit Hilfe des Siebdruckverfahrens aufgebracht,
c) die Bedruckung wird bei einer Temperatur, bei der das Siebdrucköl flüchtig ist, getrocknet, wobei das Siebdrucköl verdampft,
d) die beiden Scheiben mit der getrockneten Bedruckung werden aufeinander gelegt, auf Verformungstemperatur erwärmt und als Pärchen entsprechend der einfachen oder doppelten Krümmung gekrümmt, wobei gleichzeitig die Bedruckung eingebrannt wird,
e) die gekrümmten Scheiben des Pärchens werden voneinander entfernt, die Kunststoffolie wird angeordnet und die Scheiben des Pärchens werden unter Zwischenschaltung der Kunststoffolie wieder aufeinandergelegt, erwärmt und zur Verbundglasscheibe vereinigt. - Das erfindungsgemäße Verfahren kann ohne Schwierigkeiten in eine bestehende Fertigungsstraße für Verbundglasscheiben integriert werden. Das Trocknen der Bedruckung gemäß Verfahrensschritt c) des Patentanspruches 1 kann im Durchlauf auf einem Weg der Fertigungsstraße erfolgen, den die bedruckte Glasscheibe ohnehin passieren muß. Die Trocknung kann mit einer Infrarotstrahlung durchgeführt werden. Überraschenderweise haftet die Bedruckung nach der Trocknung ausreichend, so daß entsprechend dem Merkmal d) des Patentanspruches 1 weiter verfahren werden kann. Obgleich die lediglich getrocknete Bedruckung bei dem Vorgang der Verformung und dem damit verbundenen Vorgang des Einbrennens praktisch luftdicht gekapselt ist, entsteht in der Bedruckung keine Störung durch freiwerdende Gase, Verfließen oder dergleichen. Die Qualität der eingebrannten Bedruckung genügt allen Anforderungen, und zwar auch im Langzeitverhalten.

Im einzelnen bestehen im Rahmen der Erfindung mehrere Möglichkeiten der weiteren Ausbildung des Verfahrens. So wird nach bevorzugter Ausführungsform der Erfindung als anorganisches Bindemittel der verwendeten Emailfarbe zumindest ein Kieselgel eingesetzt. Der Ausdruck Kieselgel steht hier in seiner allgemeinsten Bedeutung. Er umfaßt auch Modifizierungen. Es empfiehlt sich, die Substanzen oder Mischungen der Substanzen einzusetzen, die der Patentanspruch 3 aufführt. Ein besonders geeignetes anorganisches Bindemittel, insbesondere ein solches aus der vorstehend angegebenen Gruppe, kann leicht durch Versuche ermittelt und auf die übrige Zusammensetzung der Emailfarbe, aber auch auf die Zusammensetzung des Glases der Scheibe abgestimmt werden. Stets empfiehlt es sich nach bevorzugter Ausführungsform der Erfindung dem Bindemittel zumindest einen Metallalkohol beizugeben. Insoweit wird man zweckmäßigerweise mit einem Metallalkohol der Gruppe "Aluminium, Titan, Zirkon, Bor" oder Mischungen davon arbeiten. Wenn beim Einbrennen wider Erwarten noch Gase entstehen, so läßt sich deren störende Wirkung verhindern, indem dem anorganischen Bindemittel zusätzlich ein anorganischer Sauerstoffspender beigegeben wird. Hier empfehlen sich insbesondere Sauerstoffspender aus der Gruppe "Bleidioxid, Menninge, Manganoxid" oder Mischungen davon. Die mengenmäßige Abstimmung kann durch Versuche ermittelt werden.

Im Rahmen der Erfindung kann mit allen üblichen Siebdruckölen gearbeitet werden. Bewährt hat es sich, die Emailfarbe mit Terpineol als Siebdrucköl anzumachen. Man kann aber auch Glykol oder Mischungen von Terpineol oder Glykol als Siebdrucköl einsetzen.

Die Emailfarbe, mit der erfindungsgemäß gearbeitet wird, hat bis auf die angegebenen Besonderheiten, eine für solche Emailfarben üblichen Zusammensetzung, z. B. mit 40 bis 80 Gew.-%, vorzugweise etwa 50 Gew.-%, Glasfluß und etwa 20 bis 60 Gew.-%, vorzugsweise 30 Gew.-%, eines keramischen Farbkörpers. Die Verformungstemperatur für die Durchführung des Verfahrensschrittes d) aus Patentanspruch 1 kann ohne Schwierigkeiten so eingestellt werden, daß auch das Einbrennen erfolgt, oder umgekehrt. Nach bevorzugter Ausführungsform der Erfindung wird jedoch darauf geachtet, daß die Trocknung gemäß Verfahrensschritt c) des Patentanspruches 1 bei einer Temperatur von unter 300° C durchgeführt wird, was mit Hilfe einer Infrarot-Trocknung unschwer erreicht werden kann.

Die im Rahmen der Erfindung verwendete Emailfarbe ist auch für sich Gegenstand der Erfindung.

### Ausführungsbeispiel

Zur Herstellung einer einfachgekrümmten Verbundglasscheibe in Form einer Windschutzscheibe eines Kraftfahrzeuges mit einer randseitigen Bedruckung wurde zu Testzwecken wie folgt vorgegangen:
1) Mit einem handelsüblichen Siebdruckfarbpulver für Verbundglas wurden mit verschiedenen Siebdruckölen drei siebdruckfähige Emailfarben angepastet, und zwar gemäß folgender Tabelle:

| Anteile in Gew.-% | A | B | C |
|---|---|---|---|
| Glasfluß (Bleiborosilikat) | 50 | 50 | 50 |
| Farbkörper (Kupfer-Chromspinell) | 28 | 28 | 28 |
| Terpineol | 18 | 22 | 18 |
| Ethylcellulose | 4 | - | - |
| Silikatbindemittel | - | - | 4 |

2) Auf drei plane Windschutzscheiben wurden mit den einzelnen Emailfarben mit Hilfe eines Polyestersiebgewebes mit 77 Fäden/cm jeweils 5 cm breite umlaufende Dekorstreifen mit einer Schichtdicke von 10 - 15 µm aufgebracht.
3) Die Bedruckung gemäß 2) wurde mit Hilfe von Infrarot-Strahlen getrocknet, wobei auf der Glasscheibe im Trocknungsbereich eine Temperatur etwa von 250° C gemessen wurde. Das Entweichen von Dämpfen der Siebdrucköle konnte beobachtet werden. Die Trocknung wurde solange geführt, bis ein Verdampfen von Siebdrucköl nicht mehr wahrgenommen werden konnte. Nach dem Abkühlen der Scheiben wurde die Haftung der Emailfarben durch Aufkleben von Kleberstreifen und Abziehen der Kleberstreifen überprüft. Die Emailfarben A und C hafteten gut. Sie ließen sich mit dem Kleberstreifen nicht entfernen. Emailfarbe B zeigte keine Haftung und blieb fast vollständig am Kleberstreifen.
4) Die gemäß 3) vorbereitete Glasscheibe wurde mit einer zweiten unbedruckten Glasscheibe zusammengelegt, in 8 Minuten auf eine Temperatur von 620° C erwärmt, für die Zeitdauer von 1 Minute auf dieser Temperatur gehalten und danach bei dieser Temperatur mit üblichen Einrichtungen gekrümmt. Nach dem Abkühlen der gekrümmten Scheibenpaare wurde die zweite Glasscheibe abgehoben. Durch Augeninspektion und Untersuchung auf Verklebung wurde die Qualität der eingebrannten Emailfarben beurteilt:
- Farbe A: zeigte unzulässig starke Farbtonschwankungen, Poren und Verklebungen mit der Gegenscheibe.
- Farbe B: zeigt einen einheitlichen Farbton, jedoch unzulässige Poren und Verklebungen mit der Gegenscheibe. Die Konturen waren verwischt.
- Farbe C: zeigte eine fehlerfreie dichte Emailschicht, keine störenden Poren und keine Verklebungen mit der Gegenscheibe.

5) Die gemäß 4) behandelten gekrümmten Glasscheiben wurden wie üblich zu einer Verbundglasscheibe vereinigt und deren Langzeitverhalten simulierend untersucht.

In der folgenden Tabelle sind die Untersuchungsergebnisse festgehalten worden:

| Farbe | A | B | C |
|---|---|---|---|
| Lagerung im Wasserbad 6 Wochen 20° C | negativ | negativ | positiv |
| Lagerung bei 100° C/l h an Luft | negativ | negativ | positiv |
| Lagerung bei 100° C/l h im Wasserbad | negativ | negativ | positiv |

Bei den Farben A und B zeigten sich nach den Tests für das Langzeitverhalten unzulässige Fehler in der Verbundfolie, z. B. Auffeuchtungen und Blasen. Die Scheiben, die mit der Farbe C bedruckt worden waren, waren nach den Tests fehlerfrei.

## Patentansprüche

1. Verfahren zur Herstellung einer einfachgekrümmten oder einer doppeltgekrümmten Verbundglasscheibe, insbesondere für Kraftfahrzeuge, die aus einer Innenscheibe aus Glas, einer Außenscheibe aus Glas und einer Kunststoffolie-Zwischenschicht besteht, und auf der Kunststoffolienseite von zumindest einer der Scheiben, bei Kraftfahrzeugscheiben auf der Kunststoffolienseite der Außenscheibe, eine im Siebdruckverfahren aufgebrachte Bedruckung, insbesondere eine Randbedruckung aufweist, - mit den folgenden Maßnahmen und Verfahrensschritten:
a) Es wird eine siebdruckfähige Emailfarbe verwendet, die aus Glasfluß, zumindest einem keramischen Farbkörper sowie einem anorganischen Bindemittel besteht und mit einem organischen Siebdrucköl angemacht wird,
b) die Bedruckung wird mit der Emailfarbe gemäß a) auf die zugeordnete Oberfläche der Scheibe mit Hilfe des Siebdruckverfahrens aufgebracht,
c) die Bedruckung wird bei einer Temperatur, bei der das Siebdrucköl flüchtig ist, getrocknet, wobei das Siebdrucköl verdampft,
d) die beiden Scheiben mit der getrockneten Bedruckung werden aufeinander gelegt, auf Verformungstemperatur erwärmt und als Pärchen entsprechend der einfachen oder doppelten Krümmung gekrümmt, wobei gleichzeitig die Bedruckung eingebrannt wird,
e) die gekrümmten Scheiben des Pärchens werden voneinander entfernt, die Kunststoffolie wird angeordnet und die Scheiben des Pärchens werden unter Zwischenschaltung der Kunststoffolie wieder aufeinandergelegt, erwärmt und zur Verbundglasscheibe vereinigt.

2. Verfahren nach Anspruch 1, wobei als anorganisches Bindemittel der verwendeten Emailfarbe zumindest ein Kieselgel eingesetzt wird.

3. Verfahren nach einem der Ansprüche 1 oder 2, wobei ein handelsübliches Kieselsäurebindemittel der Gruppe "Tetramethylorthosilikat, Tetraethylorthosilikat, Tetra-n-propylsilikat, Tetramethylglykolsilikat, Tetraethylglykolsilikat, Ethylpolysilikat, Kieselsäureester-Bindemittel, ethylglykolfreies Kieselsäure-Bindemittel, modifiziertes Kieselsäure-Bindemittel, Kieselsäureester-Bindemittel, modifizierter Kieselsäureester, Butylglykolsilikat" oder Mischungen davon, eingesetzt werden.

4. Verfahren nach einem der Ansprüche 1 bis 3, wobei dem anorganischen Bindemittel zumindest ein Metallalkohol beigegeben wird.

5. Verfahren nach Anspruch 4, wobei ein Metallalkohol der Gruppe "Aluminium, Titan, Zirkon, Bor" oder Mischungen davon beigesetzt werden.

6. Verfahren nach einem der Ansprüche 1 bis 5, wobei dem anorganischen Bindemittel ein anorganischer Sauerstoffspender beigesetzt wird.

7. Verfahren nach Anspruch 6, wobei ein anorganischer Sauerstoffspender aus der Gruppe "Bleidioxid, Mennige, Manganoxid" oder Mischungen davon beigegeben werden.

8. Verfahren nach einem der Ansprüche 1 bis 7, wobei die Emailfarbe mit Terpineol als Siebdrucköl angemacht wird.

9. Verfahren nach einem der Ansprüche 1 bis 7, wobei die Emailfarbe mit Glykol als Siebdrucköl angemacht wird.

10. Verfahren nach einem der Ansprüche 1 bis 9, wobei die Trocknung gemäß Verfahrensabschnitt c) des Patentanspruches 1 bei einer Temperatur von unter 300° C durchgeführt wird.

## Claims

1. A process for producing a composite glass pane with single curvature or with double curvature, particularly for motor vehicles, which consists of an inner pane of glass, an outer pane of glass and an intermediate layer of plastics sheeting, and printing, particularly edge printing, which is applied by the screen printing process to the plastics sheeting side of at least one of the panes, and which in motor vehicle glasses is applied to the plastics sheeting side of the outer pane, - comprising the following measures and process steps:
a) a screen-printable enamel colour is used, which consists of glass flux, of at least one ceramic colouring body and of an inorganic binder, and which is mixed with an organic screen printing oil,
b) the printing is applied, using the enamel colour according to a), to the assigned surface of the pane by means of the screen printing process,
c) the printing is dried at a temperature at which the screen printing oil is volatile, whereupon the screen printing oil evaporates,
d) the two panes with the dried printing are placed on each other, heated to the deformation temperature, and are curved as a pair corresponding the single or double curvature, wherein the printing is simultaneously burnt in,
e) the curved panes of the pair are removed from each other, the plastics sheeting is arranged and the panes of the pair are placed on each other again with the plastics sheeting interposed therebetween, are heated, and are joined to form the composite glass pane.

2. A process according to claim 1, wherein at least one silica gel is used as the inorganic binder of the enamel colour used.

3. A process according to either one of claims 1 or 2, wherein a commercially available silicic acid binder is used, from the group comprising tetramethyl orthosilicate, tetraethyl orthosilicate, tetra-n-propyl silicate, tetramethylglycol silicate, tetraethylglycol silicate, ethyl polysilicate, silicic acid ester binders, silicic acid binders which are free from ethyl glycol, modified silicic acid binders, modified silicic acid esters and butyl glycol silicate, or mixtures thereof.

4. A process according to any one of claims 1 to 3, wherein at least one metallic alcohol compound is added to the inorganic binder.

5. A process according to claim 4, wherein a metallic alcohol compound from the group comprising aluminium, titanium, zirconium, boron or mixtures thereof is added.

6. A process according to any one of claims 1 to 5, wherein an inorganic oxygen donor is added to the inorganic binder.

7. A process according to claim 6, wherein an inorganic oxygen donor from the group comprising lead oxide, red lead, manganese oxide or mixtures thereof is added.

8. A process according to any one of claims 1 to 7, wherein the enamel colour is mixed with terpineol as the screen printing oil.

9. A process according to any one of claims 1 to 7, wherein the enamel colour is mixed with glycol as the screen printing oil.

10. A process according to any one of claims 1 to 9, wherein drying according to process step c) of claim 1 is effected at a temperature below 300°C.

## Revendications

1. Procédé pour la fabrication d'une plaque de verre feuilletée, à cintrage simple ou double, destinée en particulier aux véhicules automobiles, constituée d'une vitre intérieure en verre, d'une vitre extérieure en verre et d'une couche intermédiaire en feuille plastique et qui, sur la face de la feuille plastique d'au moins une des vitres, pour les vitrages de véhicules automobiles sur la face de la feuille plastique de la vitre extérieure, comporte une impression réalisée par sérigraphie, en particulier une impression en bordure, - les mesures et étapes du procédé étant les suivantes:
a) on utilise une encre-émail se prêtant à la sérigraphie, constituée d'un flux de verre, tout au moins d'un pigment céramique ainsi que d'un liant anorganique, que l'on délaie avec une huile organique de sérigraphie,
b) l'impression est appliquée avec l'encre-émail comme indiqué en a) sur la surface correspondante de la vitre au moyen du procédé de sérigraphie,
c) l'impression est séchée à une température à laquelle l'huile de sérigraphie est volatile, faisant évaporer l'huile de sérigraphie,
d) les deux vitres avec leurs impressions séchées sont déposées l'une sur l'autre, chauffées à température de déformation et cintrées par paires, suivant le simple ou double cintrage, en cuisant en même temps l'impression.
e) les vitres cintrées de la paire sont séparées l'une de l'autre, la feuille plastique est mise en place et les vitres de la paire sont à nouveau posées l'une sur l'autre en intercalant la feuille plastique, puis chauffées et réunies en une vitre feuilletée.

2. Procédé selon la revendication 1, caractérisé en ce que le liant anorganique de l'encre-émail utilisée est au moins un gel de silice.

3. Procédé selon l'une des revendications 1 ou 2, caractérisé en ce que l'on utilise un liant usuel à base d'un acide silicique du groupe "tétraméthyl-orthosilicate, tétraéthyl-orthosilicate, tétra-n-propylsilicate, tétraméthylglycolsilicate, tétraéthylglycolsilicate, éthylpolysilicate, liant à base d'un ester d'acide silicique, liant à base d'un ester d'acide silicique exempt d'éthylglycol, liant à base d'un acide silicique modifié, liant à base d'un ester d'acide silicique, ester d'un acide silicique modifié, butylglycolsilicate" ou des mélanges de ces produits.

4. Procédé selon l'une des revendications 1 à 3, caractérisé en ce que l'on ajoute au liant anorganique au moins un alcoolate métallique.

5. Procédé selon la revendication 4, caractérisé en ce que l'on ajoute un alcoolate métallique du groupe "aluminium, titane, zirconium, bore" ou des mélanges de ces produits.

6. Procédé selon l'une des revendications 1 à 5, caractérisé en ce que l'on ajoute au liant anorganique un donneur d'oxygène anorganique.

7. Procédé selon la revendication 6, caractérisé en ce que l'on ajoute un donneur d'oxygène anorganique du groupe "dioxyde de plomb, minium, oxyde de manganèse" ou des mélanges de ceux-ci.

8. Procédé selon l'une des revendications 1 à 7, caractérisé en ce que l'encre-émail est diluée avec du terpinéol en tant qu'huile de sérigraphie.

9. Procédé selon l'une des revendications 1 à 7, caractérisé en ce que l'encre-émail est diluée avec du glycol en tant qu'huile de sérigraphie.

10. Procédé selon l'une des revendications 1 à 9, caractérisé en ce que le séchage selon le point c) de la revendication 1 est réalisé à une température inférieure à 300°C.
